# EUROPÄISCHE PATENTSCHRIFT

(11) **EP 1 879 731 B1**
(45) Veröffentlichungstag und Bekanntmachung des Hinweises auf die Patenterteilung: **10.02.2010**
(21) Anmeldenummer: 06742742.7
(22) Anmeldetag: 28.04.2006
(51) Int. Cl.: B29C 67/00

(54) **VORRICHTUNG UND VERFAHREN ZUM HERSTELLEN EINES DREIDIMENSIONALEN OBJEKTS MIT EINEM BEHEITZEN BESCHICHTER FÜR PULVERFÖRMIGES AUFBAUMATERIAL**
APPARATUS AND METHOD FOR THE PRODUCTION OF A THREE-DIMENSIONAL OBJECT BY MEANS OF A HEATED COATING DEVICE FOR POWDERY STRUCTURAL MATERIAL
DISPOSITIF ET PROCEDE POUR PRODUIRE UN OBJET EN TROIS DIMENSIONS AVEC UN SYSTEME D'ENDUCTION CHAUFFE, POUR MATERIAU STRUCTURAL PULVERULENT

(30) Priorität: 13.05.2005 DE 102005022308
(43) Veröffentlichungstag der Anmeldung: 23.01.2008
(73) Patentinhaber: EOS GmbH Electro Optical Systems, 82152 Krailling (DE)
(72) Erfinder: PHILIPPI, Jochen, 92166 Gräfelfing (DE); PERRET, Hans, 81543 München (DE); LANGER, Helmar, 82008 Unterhaching (DE)
(74) Vertreter: Hofer, Dorothea
(86) Internationale Anmeldenummer: PCT/EP2006/003992
(87) Internationale Veröffentlichungsnummer: WO 2006/122645

(56) Entgegenhaltungen:
- US-A- 5 647 931
- US-A1- 2002 090 313
- US-A1- 2004 104 499

## Beschreibung

Die vorliegende Erfindung bezieht sich auf einen Beschichter zum Auftragen von pulverförmigen Schichten nach dem Oberbegriff des Anspruchs 1 sowie auf eine Vorrichtung und ein Verfahren zur Herstellung eines dreidimensionalen Objekts nach dem Oberbegriff des Anspruchs 10 bzw. 11.

Ein derartiger Beschichter zum Auftragen von pulverförmigen Schichten, sowie eine derartige Vorrichtung und ein derartiges Verfahren zum Herstellen eines dreidimensionalen Objekts sind aus der DE 195 14 740 bekannt. Jedoch weist die darin beschriebene Lasersintervorrichtung keine Einrichtung zum Vorwärmen des pulverförmigen Materials auf.

Die in der EP 0 764 079 B2 beschriebene Lasersintervorrichtung weist einen unbeheizten Beschichter zum Auftragen von pulverförmigen Schichten und einen Heizstrahler seitlich über dem

Dokument US-A- 5 647 931 zeigt die Merkmale der Oberbegriffe der Ansprüche I und II.

Baufeld auf, der zum Vorwärmen einer neu auf das Baufeld aufgetragenen kalten Pulverschicht dient. Diese Vorrichtung hat den Nachteil, dass das pulverförmige Material erst vorgewärmt werden kann, wenn es auf das Baufeld aufgetragen ist. Daher verlängert sich die Gesamtbauzeit um die zur Vorwärmung des pulverförmigen Materials benötigte Zeit. Solange der Beschichter noch über das Baufeld bewegt wird, findet zudem eine Abschattung von Bereichen der aufgetragenen Pulverschicht statt, sodass die Vorwärmung des Pulvers nicht gleichmäßig erfolgt.

Aus der DE 41 34 265 A1 ist eine Vorrichtung zum Herstellen eines dreidimensionalen Objekts durch schichtweises Verfestigen von flüssigem Material bekannt, wobei ein flexibler Abstreifer zum Ausstreichen von Unebenheiten der Oberfläche des Flüssigkeitsbades dient. Der Abstreifer ist zur beschleunigten Einstellung der Schichtdicke mit einem Heizelement versehen.

Aus der WO B7/07538 ist eine Vorrichtung und ein Verfahren zur Herstellung eines dreidimensionalen Körpers durch Verfestigen von Schichten eines pulverförmigen Materials bekannt, wobei zunächst Schichten eines pulverförmigen Materials auf eine Oberfläche aufgebracht und dann mit einer Walze bis zu einer vorbestimmten Dicke verdichtet werden. Um die Pulverschichten während dieses Verdichtens in eine zusammenhängende Masse umzuwandeln, ist diese Walze beheizt.

Der vorliegenden Erfindung liegt die Aufgabe zugrunde, eine Vorrichtung und ein Verfahren zum Herstellen eines dreidimensionalen Objekts durch Verfestigen von Schichten eines pulverförmigen Materials bereitzustellen, mit der bzw. mit dem die Bauzeit für das dreidimensionale Objekt verkürzt werden kann.

Die Aufgabe wird erfüllt durch einen Beschichter nach Anspruch 1 und durch eine Vorrichtung bzw. ein Verfahren zum Herstellen eines dreidimensionalen Objekts durch Verfestigen von Schichten eines pulverförmigen Materials nach Anspruch 10 bzw. 11.

Die Erfindung hat den Vorteil, dass die Vorwärmung des pulverförmigen Materials schon vor oder während der Auftragung einer Schicht erfolgt. Nach dem Auftragen der Schicht ist das pulverförmige Material daher bereits vorgewärmt, wodurch die Bauzeit zur Herstellung eines dreidimensionalen Objekts wesentlich verkürzt werden kann, da die Aufheizzeiten für neu aufgetragene Schichten vermieden oder zumindest wesentlich verringert werden können.

Die Erfindung hat weiter den Vorteil, dass die für die Pulvervorwärmung von bereits auf das Baufeld aufgetragenen Schichten benötigte Heizleistung verringert werden kann. Das führt zu verringerten Regelanforderungen an eine Heizeinrichtung zum Heizen einer aufgetragenen Schicht und zu einer Verminderung der Pulvervorschädigung durch sonst notwendige Zyklen mit hoher Heizleistung.

Die Erfindung hat weiter den Vorteil, dass die Vorwärmung des pulverförmigen Materials gleichmäßig über die gesamte Schicht erfolgt. Bei der Vorwärmung des Pulverbetts mit einer Strahlungsheizung nach dem Auftragen einer Schicht wird die Strahlung teilweise reflektiert, sodass sich in der Schicht ein Temperaturgradient einstellt und die Gefahr der oberflächlichen Überhitzung besteht. Mit dem erfindungsgemäßen Beschichter wird hingegen das pulverförmige Material gleichmäßig durchwärmt.

Die Vorwärmung des pulverförmigen Materials bereits vor dem Auftragen der Schicht hat den Vorteil, dass keine großen Temperaturunterschiede zwischen Pulverbett und neu aufgetragener Schicht auftreten. Dadurch können unerwünschte thermische Effekte wie der Bimetalleffekt vermieden werden. Weiter kann dadurch das Prozessfenster vergrößert werden.

Ein beheizter Beschichter hat weiter den Vorteil, dass durch den thermischen Kontakt des Beschichters mit dem Pulverbett keine Wärmeenergie aus dem Pulverbett abgeführt wird. Somit werden die thermischen Bedingungen im Pulverbett nicht durch den Beschichter gestört und es können so gleich bleibende thermische Bedingungen im Pulverbett erzielt werden.

Eine in dem Beschichter integrierte Fluidisierungseinrichtung hat den Vorteil, dass das pulverförmige Material unmittelbar vor dem Auftragen fluidisiert und durch die Verwendung von vorgewärmtem Gas mit der Fluidisierung gleichzeitig vorgewärmt werden kann.

Die Verwendung einer Doppelklinge mit einer Vorratskammer für das pulverförmige Material hat den Vorteil größer Kontaktflächen für den thermischen Kontakt zwischen pulverförmigen Material und beheizten Beschichter.

Weitere Merkmale und Zweckmäßigkeiten der Erfindung ergeben sich aus der Beschreibung von Ausführungsbeispielen anhand der beigefügten Zeichnungen.

Von den Figuren zeigen:
- Fig. 1: eine schematische Darstellung eines Ausfüh- rungsbeispiels einer Vorrichtung zum Her- stellen eines dreidimensionalen Objekts;
- Fig. 2: eine schematische Darstellung eines Be- schichters zum Auftragen von Schichten ei- nes pulverförmigen Materials nach einer ersten Ausführungsform;
- Fig. 3: eine schematische Darstellung eines Be- schichters nach einer zweiten Ausführungs- form; und
- Fig. 4: eine schematische Darstellung eines Be- schichters nach einer dritten Ausführungs- form.

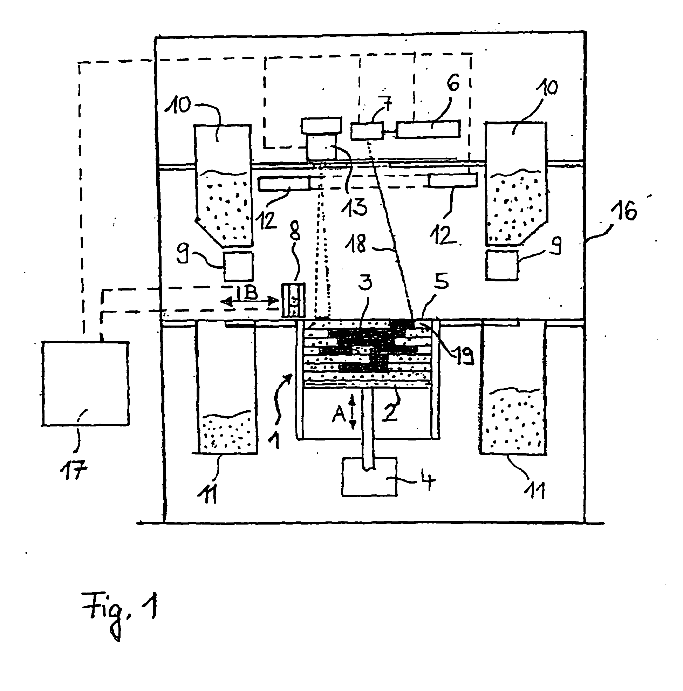

Fig. 1 zeigt eine Lasersintervorrichtung als Ausführungsbeispiel einer Vorrichtung zur Herstellung eines dreidimensionalen Objekts, in der der erfindungsgemäße Beschichter und das erfindungsgemäße Verfahren verwendet werden. Die Lasersintervorrichtung weist einen nach oben offenen Behälter 1 auf. In dem Behälter 1 ist ein Träger 2 zum Tragen des zu bildenden dreidimensionalen Objekts 3 vorgesehen. Der Träger 2 ist mittels eines Antriebs 4 in dem Behälter 1 in vertikaler Richtung A auf und ab bewegbar. Der obere Rand des Behälters 1 definiert ein Baufeld 5. Oberhalb des Baufelds 5 ist eine Bestrahlungseinrichtung 6 in Form eines Lasers angeordnet, die einen gerichteten Laserstrahl 18 abgibt, der über eine.Ablenkvorrichtung 7 auf das Baufeld 5 abgelenkt wird. Ferner ist ein Beschichter 8 zum Aufbringen einer Schicht eines zu verfestigenden pulverförmigen Materials auf die Oberfläche des Trägers 2 oder eine zuletzt verfestigte Schicht vorgesehen. Der Beschichter 8 ist mittels eines durch die Pfeile B schematisch angedeuteten Antriebs über dem Baufeld 5 hin und her bewegbar. Durch zwei Dosierer 9 links und rechts vom Baufeld wird der Beschichter aus zwei Pulvervorratsbehältern 10 gespeist. Ferner sind links und rechts vom Baufeld zwei Überlaufbehälter 11 vorgesehen, die das beim Beschichten anfallende überschüssige Pulver aufnehmen können.

Die Vorrichtung weist außerdem eine über dem Baufeld 5 angeordnete Heizeinrichtung 12 zum Heizen des Pulverbetts 19 und insbesondere zum Vorwärmen einer aufgetragenen aber noch nicht gesinterten (verfestigten) Pulverschicht auf eine für das Sintern geeignete Arbeitstemperatur T_{A} auf. Die Heizeinrichtung 12 ist beispielsweise in Form eines oder einer Mehrzahl von Heizstrahlern, wie z.B. einem Infrarotstrahler, ausgebildet, der bzw. die so oberhalb des Baufelds 5 angeordnet sind, dass die aufgetragene Pulverschicht gleichmäßig erwärmt werden kann.

In einem Abstand oberhalb des Baufelds 5 ist eine z.B. als Pyrometer oder IR-Kamera ausgebildete Temperaturmesseinrichtung 13 vorgesehen, die zum Messen der Temperatur der zuletzt aufgetragenen bzw. obersten Pulverschicht dient.

Durch eine Prozesskammer 16 ist das Baufeld von der Umgebung abgeschlossen. Dadurch kann der Prozess unter Abschluss von Luft durchgeführt und eine Oxidation des Pulvers verhindert werden.

Eine Steuer- und/oder Regeleinrichtung 17 dient zum Steuern und/oder Regeln der Bewegung B des Beschichters 8, der Heizleistung einer in dem Beschichter integrierten Beschichterheizung, der Bewegung A des Trägers 2, der Leistung der Heizeinrichtung 12, der Leistung der Bestrahlungseinrichtung 6 und der Ablenkung durch die Ablenkeinrichtung 7. Dazu ist die Steuer- und/oder Regeleinrichtung 17 mit dem durch Pfeil B angedeuteten Antrieb des Beschichters 8, der in dem Beschichter integrierten Beschichterheizung, dem Antrieb 4, der Heizeinrichtung 12, der Temperaturmesseinrichtung 13, der Ablenkeinrichtung 7 sowie mit der Bestrahlungseinrichtung 6 verbunden.

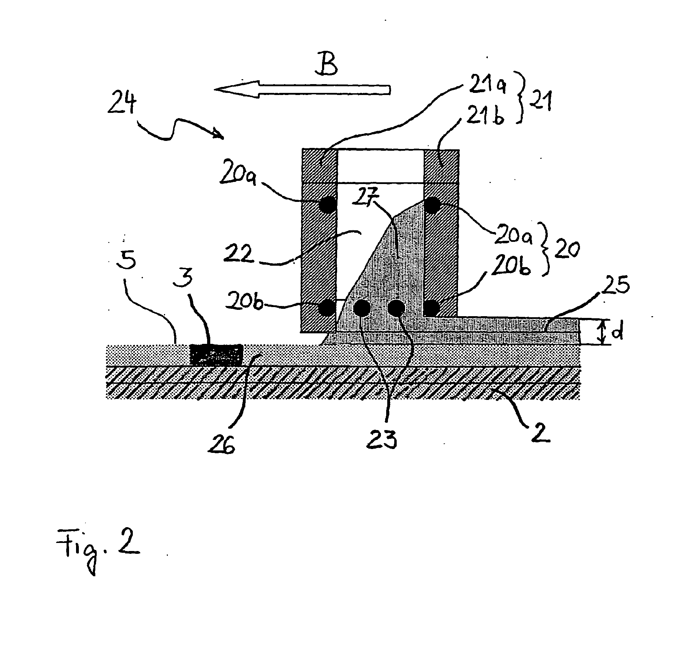

Fig. 2 zeigt eine erste Ausführungsform des in der erfindungsgemäßen Vorrichtung zur Herstellung eines dreidimensionalen Objekts verwendeten Beschichters 24, der dem Auftragen von Schichten des pulverförmigen Materials dient.

Der Beschichter 24 nach einer ersten Ausführungsform ist als eine aus zwei steifen Klingen 21a und 21b bestehende Doppelklinge 21 ausgebildet, die an den Seiten durch zwei nicht dargestellte Seitenwände zusammengehalten werden. Dabei sind die zwei steifen Klingen 21a und 21b aus einem starren Material, insbesondere aus Metall, einem hitzebeständigen Kunststoff oder einer Keramik ausgebildet. Die zwei Klingen und die zwei Seitenwände bilden zusammen eine nach oben und unten offene Vorratskammer 22, die der Aufnahme des pulverförmigen Materials für eine Schicht dient.

In die Klingen 21a und 21b ist eine Beschichterheizung 20 integriert. Die Beschichterheizung besteht aus im Inneren der Klingen 21a und 21b verlaufenden Heizdrähten 20a und 20b. Weiter ist an dem Baufeld zugewandten unteren Ende der Vorratskammer 22 ein Heizdrahtgitter 23 angeordnet.

Im Folgenden wird der Betrieb der zuvor beschriebenen Lasersintervorrichtung gemäß einem Verfahren nach einer ersten Ausführungsform beschrieben.

Zunächst befindet sich der Beschichter unterhalb des Dosierers 9 und die Vorratskammer 22 wird aus dem Vorratsbehälter 10 mit der Menge an pulverförmigen Material für eine Schicht befüllt.

Danach wird wie in Fig. 2 dargestellt durch Verfahren des Beschichters 24 parallel zur Oberfläche des Baufelds 5 eine Pulverschicht 25 auf den Träger 2 oder auf eine zuvor verfestigte Schicht 26 aufgebracht. Dabei fließt das pulverförmige Material 27 aus der Vorratskammer 22 zwischen den zwei Klingen 21a und 21b nach. Durch den thermischen Kontakt des pulverförmigen Materials 27 mit den beheizten Klingen 21a und 21b, insbesondere mit der Unterseite der Klingen, sowie mit dem Heizdrahtgitter 23 wird es vor dem Auftragen auf das Baufeld 5 auf Temperaturen nahe einer für das Lasersintern verwendeten Arbeitstemperatur T_{A} vorgewärmt.

Nach dem Aufbringen der Schicht 25 des pulverförmigen Materials 27 erfolgt die Verfestigung an dem Querschnitt des Objekts in dieser Schicht 25 entsprechenden Stellen durch Belichtung mit dem Laserstrahl 18 in an sich bekannter Art und Weise.

Entscheidend für die Qualität des fertigen Objekts ist insbesondere, dass die Temperatur der zu verfestigenden obersten Pulverschicht eine Temperatur in einem bestimmten Prozessfenster hat. Bei Temperaturen oberhalb dieses Prozessfensters wird das Pulver schon ohne zusätzliche Strahlungsenergie gesintert, während sich bei Temperaturen unterhalb des Prozessfensters Verspannungen in der verfestigten Schicht ausbilden können. Vielfach wird auch der sogenannte Curl-Effekt, bei dem sich die Ränder der verfestigten Schicht aufbiegen bzw. aufrollen, auf eine zu geringe Temperatur der obersten Pulverschicht zurückgeführt. Die mit dem Beschichter 24 aufgebrachte Pulverschicht 25 muss daher zum Erreichen guter Ergebnisse, insbesondere zum Vermeiden von Verspannungen in dem hergestellten Objekt, mit der Heizeinrichtung 12 vor dem Verfestigen auf eine Arbeitstemperatur T_{A} innerhalb des Prozessfensters erwärmt und dann während des Verfestigens in dem Prozessfenster gehalten werden.

Dazu wird nach dem Aufbringen der Pulverschicht die Temperatur dieser Schicht mit der Temperaturmesseinrichtung 13 gemessen. In Abhängigkeit von der dabei gemessenen Temperatur wird die Heizleistung der Heizeinrichtung 12 bestimmt. Ist die oberste Pulverschicht auf die Arbeitstemperatur T_{A} erwärmt, so werden die dem Querschnitt des Objekts entsprechenden Stellen in der Schicht des Aufbaumaterials durch Bestrahlen mit dem Laser 6 verfestigt.

Nach dem Verfestigen einer Schicht wird der Träger 2 um eine der Schichtdicke d entsprechende Strecke abgesenkt und die zuvor beschriebenen Schritte werden wiederholt bis die Herstellung des dreidimensionalen Objekts 3 abgeschlossen ist.

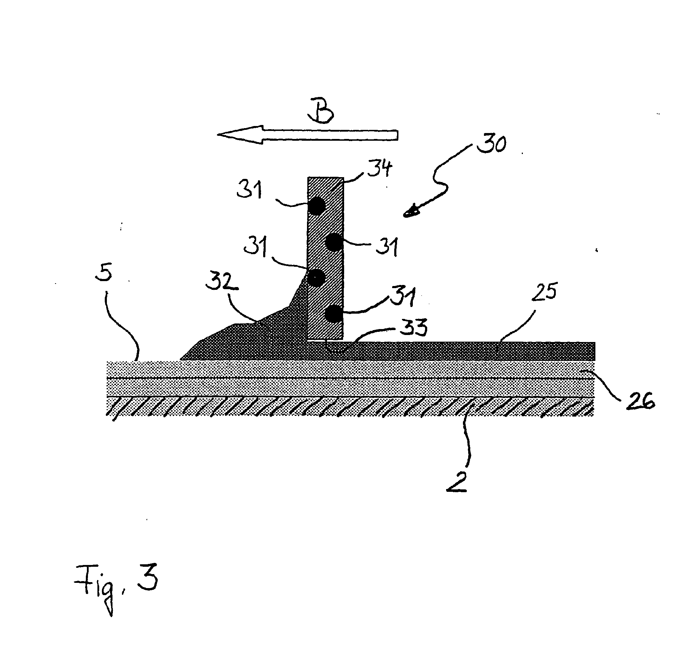

Fig. 3 zeigt eine zweite Ausführungsform des in der erfindungsgemäßen Vorrichtung zur Herstellung eines dreidimensionalen Objekts verwendeten Beschichters 30.

Der Beschichter 30 ist in Form einer steifen Klinge 34 ausgebildet. Dabei ist die steife Klinge 34 aus einem starren Material, insbesondere aus Metall, einem hitzebeständigen Kunststoff oder einer Keramik ausgebildet. In der Klinge 34 ist eine Beschichterheizung in Form eines Heizdrahts 31 integriert. Wie bei der ersten Ausführungsform ist der Beschichter 31 über dem Baufeld 5 zwischen zwei Endpositionen mit einem durch den Pfeil B angedeuteten Antrieb hin und her bewegbar.

Der Beschichter nach der zweiten Ausführungsform unterscheidet sich daher dadurch von dem Beschichter 24 nach der ersten Ausführungsform, dass der Pulvervorrat 32 für das Auftragen einer Schicht nicht in einer Vorratskammer 22 zwischen zwei Klingen eingeschlossen ist, sondern vor der einen Klinge beim Auftragen der Schicht 25 hergeschoben wird. Beim Auftragen der Schicht 25 ist der Pulvervorrat 32 mit der Klinge insbesondere mit der Klingenunterseite 33 in thermischen Kontakt und wird dadurch vorgewärmt.

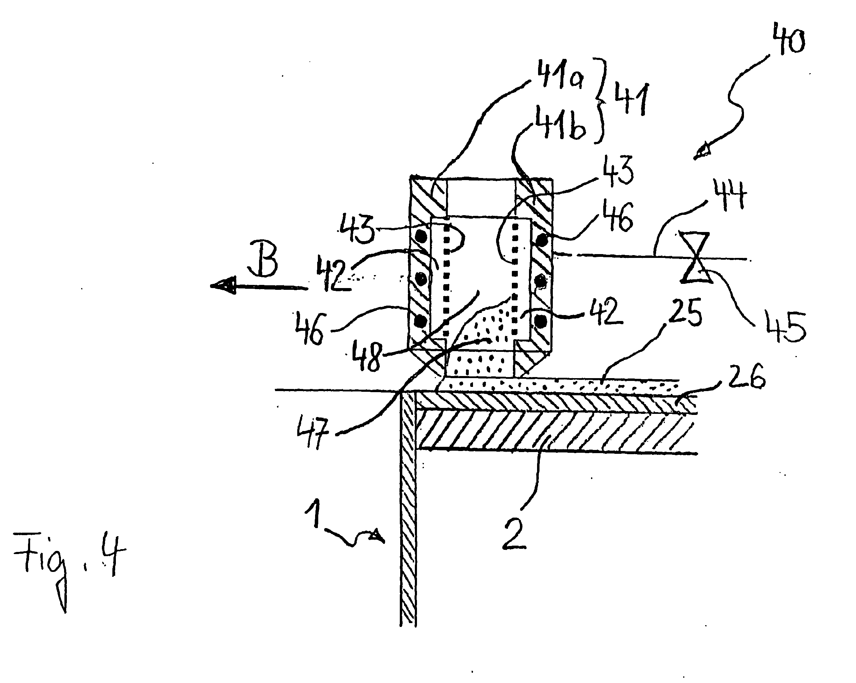

Fig. 4 zeigt eine dritte Ausführungsform des in der erfindungsgemäßen Vorrichtung zur Herstellung eines dreidimensionalen Objekts verwendeten Beschichters 40.

Der Beschichter 40 nach der dritten Ausführungsform ist wie der Beschichter 20 nach der ersten Ausführungsform als Doppelklinge 41 aus zwei steifen Klingen 41a und 41b ausgebildet, die starr miteinander verbunden sind. Dabei sind die zwei steifen Klingen 41a und 41 b aus einem starren Material, insbesondere aus Metall, einem hitzebeständigen Kunststoff oder einer Keramik ausgebildet. In die beiden Klingen 41a und 41b ist jeweils eine Fluidisierungseinrichtung integriert, die aus einer Vorkammer 42 und einem Fluidisierungsblech 43 besteht. Zum Einlassen von Stickstoffgas in die Vorkammern 42 ist eine Zuleitung 44 mit einem Ventil 45 vorgesehen. Das Fluidisierungsblech 43 besitzt viele kleine Öffnungen, deren Durchmesser kleiner als der Durchmesser der Körner des pulverförmigen Materials ist, sodass das Stickstoffgas durch das Fluidisierungsblech 43 aus der Vorkammer 42 austreten, aber kein pulverförmiges Material 47 in die Vorkammer 42 gelangen kann. Mit einer Heizeinrichtung 46 sind die Wände der Vorkammer 42 geheizt, sodass das Stickstoffgas in der Vorkammer 42 geheizt wird.

Im Betrieb wird das pulverförmige Material 47 zwischen den zwei Klingen 41a und 41b vor und/ oder während des Auftragens einer Schicht durch die Fluidisierungseinrichtungen mit vorgewärmten Stickstoff fluidisiert und gleichzeitig vorgewärmt. Dazu wird durch Öffnen des Ventils 45 und Einlassen von Stickstoffgas in die Vorkammern 42 über die Zuleitung 44 in diesen Vorkammern 42 ein Überdruck erzeugt, der zum Ausstoß von vorgewärmten Stickstoff aus den Öffnungen in den Fluidisierungsblechen 43 führt. Durch das Fluidisieren des Pulvers lässt sich das Fließverhalten des Pulvers und damit die Qualität der aufgetragenen Schicht verbessern. Gleichzeitig wird das pulverförmige Material 47 durch das vorgewärmte Stickstoffgas vorgewärmt.

Alternativen und Abwandlungen der oben beschriebenen Vorrichtungen und der oben beschriebenen Verfahren sind möglich.

Die Erfindung wurde für eine Lasersintervorrichtung beschrieben, bei der als Strahlungsquelle ein Laser verwendet wurde. Jede andere Strahlungsquelle, mit der elektromagnetische oder Teilchenstrahlung in das pulverförmige Aufbaumaterial eingebracht werden kann ist möglich. So kann z.B. eine Strahlungsquelle für inkohärente Lichtstrahlung, für IR-Strahlung, für Röntgenstrahlung oder für Elektronenstrahlung als Strahlungsquelle verwendet werden. Dementsprechend ist ein pulverförmiges Aufbaumaterial zu verwenden, das mit der jeweiligen Strahlung verfestigt werden kann.

Bei der oben beschriebenen Vorrichtung wird als Heizeinrichtung für das Vorwärmen einer bereits aufgetragenen Schicht ein Infrarotstrahler oberhalb des Baufelds beschrieben. Andere Möglichkeiten, eine zuletzt aufgetragene Schicht des Aufbaumaterials zu erwärmen, sind denkbar. Z.B. kann die Zirkulation von warmer Luft oder Stickstoff zum Vorwärmen der Schicht verwendet werden, wobei die warme Luft oder der warme Stickstoff dazu über die frisch aufgetragene Schicht geleitet wird.

Der Beschichter nach der ersten und dritten Ausführungsform wurde jeweils mit einer Vorratskammer beschrieben. Es ist jedoch auch möglich, die Vorratskammer in mehrere Kammern aufzuteilen und dadurch einen ortsaufgelösten Beschichter zu realisieren. Dabei können die verschiedenen Kammern getrennt mit unterschiedlichen pulverförmigen Materialien beschickt werden.

Die in den Beschichter integrierte Beschichterheizung zum Vorwärmen des pulverförmigen Materials wurde nach der ersten und zweiten Ausführungsform des Beschichters als Widerstandsheizung beschrieben. Es ist jedoch auch jede andere Heizeinrichtung denkbar, mit der die Klinge oder andere Teile des Beschichters, die mit dem pulverförmigen Material in Kontakt kommen, beheizt werden können. So ist es möglich, den Beschichter durch eine Strahlungsheizung oder durch Durchströmen mit vorgewärmten flüssigen Wärmemitteln indirekt zu beheizen.

Es auch möglich das pulverförmige Material im Beschichter mit einer in den Beschichter integrierten Heizung direkt z.B. mit einer Strahlungsheizung vorzuwärmen, ohne dabei Teile des Beschichters zu heizen.

Der Beschichter nach der ersten Ausführungsform wurde so beschrieben, dass Heizdrähte in den beiden Klingen vorgesehen sind und weiter ein Heizdrahtgitter in der Vorratskammer vorgesehen ist. Jedoch ist es auch möglich, nur eine dieser beiden Heizeinrichtungen zu verwenden.

Die Zufuhr des pulverförmigen Materials zu dem Beschichter wurde so beschrieben, dass es von oben durch Dosierer aus Vorratsbehältern zugeführt wird. Es ist jedoch auch möglich, das Pulver von unten aus einem Vorratsbehälter zuzuführen. Insbesondere ist es möglich einen nach oben offenen Vorratsbehälter mit einem verfahrbaren Boden vorzusehen, wobei der Boden zum Zuführen von pulverförmigen Material angehoben wird.

Der Beschichter nach der dritten Ausführungsform wurde so beschrieben, dass die Vorwärmung des Stickstoffgases durch Heizen der Wände der Vorkammern mittels einer in den Beschichter integrierten Widerstandsheizung erfolgt. Jedoch kann die Vorwärmung des Stickstoffgases, das für die in den Beschichter integrierte Fluidisierungseinrichtung verwendet wird, auch auf andere Art und Weise, insbesondere auch außerhalb des Beschichters erfolgen.

Die Fluidisierung im Beschichter nach der dritten Ausführungsform wurde so beschrieben, dass sie mit Stickstoffgas erfolgt. Es ist jedoch auch die Verwendung beliebiger anderer gasförmiger Medien, wie z.B. Luft, möglich.

Die Erfindung wurde so beschrieben, dass das Pulver durch eine in den Beschichter integrierte Heizeinrichtung beim und/ oder vor dem Auftragen einer Schicht vorgewärmt wird. Es ist zusätzlich möglich, das Pulver bereits in dem Vorratsbehälter, aus dem der Beschichter befüllt wird, mit einer Heizeinrichtung wie z.B. mit einer Widerstandsheizung, warmen Gas oder einer Strahlungsheizung vorwärmen.

## Patentansprüche

1. Beschichter zum Auftragen von pulverförmigen Schichten in einer Vorrichtung zum Herstellen eines dreidimensionalen Objekts durch Verfestigen von Schichten eines pulverförmigen Materials an den dem jeweiligen Querschnitt des Objekts entsprechenden Stellen,
wobei der Beschichter (8, 24, 30, 40) eine steife Klinge (21a, 21b; 34; 41a, 41b) aufweist, die starr mit dem Beschichter (8, 24, 30, 40) verbunden ist,
**dadurch gekennzeichnet, dass** der Beschichter (8, 24, 30, 40) eine Heizeinrichtung (20, 23; 31; 46) zum Vorwärmen des pulverförmigen Materials aufweist, die zumindest teilweise in den Beschichter integriert ist.

2. Beschichter nach Anspruch 1, wobei eine Heizeinrichtung (20, 31, 46) zum Beheizen der Klinge (21a, 21b; 34; 41a, 41b) vorgesehen ist.

3. Beschichter nach Anspruch 1 oder 2, wobei der Beschichter (8, 40) eine Einrichtung (42, 43, 44, 45, 46) zum Fluidisieren des pulverförmigen Materials mit vorgewärmtem Gas aufweist.

4. Beschichter nach Anspruch 3, wobei eine Einrichtung zum Vorwärmen des Gases außerhalb des Beschichters vorgesehen ist.

5. Beschichter nach Anspruch 3, wobei eine Einrichtung zum Vorwärmen des Gases in den Beschichter integriert ist.

6. Beschichter nach einem der Ansprüche 1 bis 5, wobei der Beschichter (24, 40) eine Vorratskammer (22, 48) aufweist, deren Wände mit einer Heizeinrichtung (20, 46) beheizbar sind.

7. Beschichter nach einem der Ansprüche 1 bis 6, wobei der Beschichter (24, 30, 40) eine Widerstandsheizung (20, 23; 31; 46) aufweist.

8. Beschichter nach einem der Ansprüche 1 bis 7, wobei der Beschichter (8) eine Strahlungsheizung zum Vorwärmen des Pulvers aufweist.

9. Beschichter nach einem der Ansprüche 1 bis 8, weiter mit einer Regeleinrichtung (17), mit der die Temperatur des Beschichters (8, 24, 30, 40) geregelt werden kann.

10. Vorrichtung zum Herstellen eines dreidimensionalen Objekts durch Verfestigen von Schichten eines pulverförmigen Materials an den dem jeweiligen Querschnitt des Objekts entsprechenden Stellen mit
einem über einem Baufeld (5) verfahrbaren Beschichter (8, 24, 30, 40) nach einem der Ansprüche 1 bis 9.

11. Verfahren zum Herstellen eines dreidimensionalen Objekts mit den Schritten:
(a) Auftragen einer Schicht (25) eines pulverförmigen Materials auf die Oberfläche eines Baufelds mit einem Beschichter (8, 24, 30, 40);
(b) Verfestigen der Schicht (25) an den dem Querschnitt des Objekts (3) entsprechenden Stellen durch Einbringen von elektromagnetischer Strahlung oder Teilchenstrahlung;
(c) Wiederholen der Schritte (a) und (b) bis das dreidimensionale Objekt (3) hergestellt ist,
**dadurch gekennzeichnet, dass** das pulverförmige Material (27, 32, 47) vor oder während des Auftragens als Schicht (25) in Schritt (a) mit einer zumindest teilweise in den Beschichter (8, 24, 30, 40) integrierten Heizeinrichtung (20, 23; 31; 46) vorgewärmt wird.

12. Verfahren nach Anspruch 11, wobei das pulverförmige Material (27, 32, 47) in Schritt (a) mit einem Beschichter (24, 30, 40) mit einer beheizten Klinge (21a, 21b; 34; 41a, 41b) durch Verfahren des Beschichters (24, 30, 40) über dem Baufeld (5) aufgetragen wird und
das Vorwärmen des pulverförmigen Materials (27, 32, 47) während dem Auftragen durch die beheizte Klinge (21a, 21b; 34; 41a, 41b) erfolgt.

13. Verfahren nach Anspruch 11 oder 12, wobei das pulverförmige Material (47) in Schritt (a) mit einem Beschichter (40) mit einer Fluidisierungskammer (48) aufgetragen wird und
das Pulver vor oder während dem Auftragen der Schicht mit vorgewärmtem Gas in der Fluidisierungskammer (48) beim Fluidisieren vorgewärmt wird.

14. Verfahren nach einem der Ansprüche 11 bis 13, wobei der Beschichter (24, 30, 40) eine Widerstandsheizung (20, 23; 31; 46) aufweist und die Vorwärmung des Pulvers (32, 27, 47) durch Kontakt mit den durch die Widerstandsheizung (20, 23; 31; 46) beheizten Teilen des Beschichters (24, 30, 40) erfolgt.

15. Verfahren nach einem der Ansprüche 11 bis 14, wobei die Vorwärmung des Pulvers mit einer in den Beschichter (8) integrierten Strahlungsheizung erfolgt.

## Claims

1. Recoater for applying of powder layers in a device for the manufacturing of a three-dimensional object by solidifying of layers of a powder material at locations corresponding to the respective cross-section of the object,
wherein the recoater (8, 24, 30, 40) comprises a rigid blade (21a, 21b; 24; 41a, 41b) which is rigidly connected to the recoater (8, 24, 30, 40),
**characterised in that** the recoater (8, 24, 30, 40) comprises a heating device (22, 23; 31; 46), which is at least partially integrated into the recoater, for preheating the powder material.

2. Recoater according to claim 1, wherein a heating device (20, 31, 46) for heating of the blade (21a, 21b; 34; 41a, 41b) is provided.

3. Recoater according to claim 1 or 2, wherein the recoater (8, 40) comprises a device (42, 43, 44, 45, 46) for fluidizing the powder material with preheated gas.

4. Recoater according to claim 3, wherein a device for preheating the gas outside the recoater is provided.

5. Recoater according to claim 3, wherein a device for preheating the gas is integrated into the recoater.

6. Recoater according to one of claims 1 to 5, wherein the recoater (24, 40) comprises a reservoir chamber (22, 48), the walls of which are heatable with a heating device (20, 46).

7. Recoater according to one of claims 1 to 6, wherein the recoater (24, 30, 40) comprises a resistance heater (20, 23; 31; 46).

8. Recoater according to one of claims 1 to 7, wherein the recoater (8) comprises a radiant heater for preheating the powder.

9. Recoater according to one of claims 1 to 8, further comprising a control device (17) with which the temperature of the recoater (8, 24, 30, 40) can be controlled.

10. Device for the manufacturing of a three-dimensional object by solidifying of layers of a powder material at locations corresponding to the respective cross section of the object comprising
a recoater (8, 24, 30, 40) according to one of claims 1 to 9 moveable across a building area (5).

11. Method for the manufacturing of a three-dimensional object comprising the steps of:
(a) applying a layer (25) of a powder material onto the surface of a building area by means of a recoater (8, 24, 30, 40) ;
(b) solidifying the layer (25) at locations corresponding to the cross-section of the object by means of introducing electromagnetic radiation or particle radiation;
(c) repeating the steps (a) and (b) until the three-dimensional object (3) is completed,
wherein the powder material (27, 32, 47) is preheated prior to or during applying the layer (25) in step (a) with a heating device (20, 23; 31; 46) being at least partly integrated into the recoater (8, 24, 30, 40).

12. Method according to claim 11, wherein the powder material (27, 32, 47) is applied in step (a) with a recoater (24, 30, 40) with a heatable blade (21a, 21b; 34; 41a, 41b) by moving the recoater (24, 30, 40) across the building area (5) and
the preheating of the powder material (27, 32, 47) takes place during applying through the heated blade (21a, 21b; 34; 41a, 41b).

13. Method according to claim 11 or 12, wherein the powder material (47) in step (a) with a recoater (40) is applied with a fluidizing chamber (48) and
the powder is preheated prior to or during applying of the layer in the fluidizing chamber (48) during fluidizing with preheated gas.

14. Method according to one of claims 11 to 13, wherein the recoater (24, 30, 40) comprises a resistance heater (20, 23; 31; 46) and the preheating of the powder (32, 27, 47) takes place through contact with the parts of the recoater (24, 30, 40) which are heated by the resistant heater (20, 23; 31; 46).

15. Method according to one of claims 11 to 14, wherein the preheating of the powder is carried out with a radiant heater integrated in the recoater (8).

## Revendications

1. Enducteur pour déposer des couches pulvérulentes dans un dispositif de réalisation d'un objet tridimensionnel par la consolidation de couches en matériau pulvérulent aux emplacements correspondants à la section respective de l'objet,
ledit enducteur (8, 24, 30, 40) comportant une lame (21 a, 21b ; 34 ; 41 a, 41 b) rigide, qui est reliée de manière rigide à l'enducteur (8, 24, 30, 40),
**caractérisé en ce que** ledit enducteur (8, 24, 30, 40) comportant un dispositif (20, 23 ; 31 ; 46) de chauffage pour le préchauffage du matériau pulvérulent, qui est intégré, au moins en partie, dans l'enducteur.

2. Enducteur selon la revendication 1, **caractérisé en ce qu'**il est prévu un dispositif (20, 31, 46) de chauffage pour chauffer la lame (21 a, 21b; 34 ; 41a, 41b).

3. Enducteur selon la revendication 1 ou 2, **caractérisé en ce que** l'enducteur (8, 40) comporte un dispositif (42, 43, 44, 45, 46) destiné à fluidiser le matériau pulvérulent avec un gaz préchauffé.

4. Enducteur selon la revendication 3, **caractérisé en ce qu'**il est prévu un dispositif pour le préchauffage du gaz en dehors de l'enducteur.

5. Enducteur selon la revendication 3, **caractérisé en ce qu'**un dispositif pour le préchauffage du gaz est intégré dans l'enducteur.

6. Enducteur selon l'une quelconque des revendications 1 à 5, **caractérisé en ce que** l'enducteur (24, 40) comporte une chambre (22, 48) de réserve, dont les parois peuvent être chauffées au moyen d'un dispositif de chauffage (20, 46).

7. Enducteur selon l'une quelconque des revendications 1 à 6, **caractérisé en ce que** l'enducteur (24, 30, 40) comporte un chauffage (20, 23 ; 31 ; 46) par résistance.

8. Enducteur selon l'une quelconque des revendications 1 à 7, **caractérisé en ce que** l'enducteur (8) comporte un chauffage radiant pour le préchauffage de la poudre.

9. Enducteur selon l'une quelconque des revendications 1 à 8, comportant en outre un dispositif (17) de réglage, par lequel la température de l'enducteur (8, 24, 30, 40) peut être réglée.

10. Dispositif de réalisation d'un objet tridimensionnel par la consolidation de couches en matériau pulvérulent aux emplacements correspondants à la section respective de l'objet, comportant un enducteur (8, 24, 30, 40) selon l'une quelconque des revendications 1 à 9, déplaçable au-dessus d'une zone (5) d'élaboration.

11. Procédé de réalisation d'un objet tridimensionnel, comportant les étapes :
(a) dépôt d'une couche (25) en matériau pulvérulent au moyen d'un enducteur (8, 24, 30, 40) sur la surface d'une zone d'élaboration ;
(b) consolidation de la couche (25) aux emplacements correspondants à la section de l'objet (3) sous l'effet de la pénétration d'un rayonnement électromagnétique ou d'un rayonnement de particules ;
(c) répétition des étapes (a) et (b) jusqu'à ce que l'objet (3) tridimensionnel soit réalisé,
**caractérisé en ce que** le matériau (27, 32, 47) pulvérulent est préchauffé au moins partiellement avant ou pendant l'application sous forme de couche (25) au cours de l'étape (a), au moyen d'un dispositif (20, 23 ; 31 ; 46) de chauffage intégré dans l'enducteur (8, 24, 30, 40).

12. Procédé selon la revendication 11, **caractérisé en ce que** le matériau (27, 32, 47) pulvérulent est déposé au cours de l'étape (a) au moyen d'un enducteur (24, 30, 40) avec une lame (21a, 21b ; 34 ; 41a, 41 b) chauffée, sous l'effet du déplacement de l'enducteur (24, 30, 40) au-dessus de la zone (5) d'élaboration, et
le préchauffage du matériau (27, 32, 47) pulvérulent est effectué pendant l'application au moyen de la lame (21 a, 21 b ; 34 ; 41 a, 41 b) chauffée.

13. Procédé selon la revendication 11 ou 12, **caractérisé en ce que** le matériau (47) pulvérulent est déposé au cours de l'étape (a) au moyen d'un enducteur (40) muni d'une chambre (48) de fluidisation, et
la poudre est préchauffée, avant ou pendant l'application de la couche, par un gaz préchauffé, dans la chambre (48) de fluidisation pendant la fluidisation.

14. Procédé selon l'une quelconque des revendications 11 à 13, **caractérisé en ce que** l'enducteur (24, 30, 40) comporte un chauffage (20, 23 ; 31 ; 46) par résistance et le préchauffage de la poudre (32, 27, 47) est effectué par contact avec les parties chauffées de l'enducteur (24, 30, 40) au moyen du chauffage (20, 23 ; 31 ; 46) par résistance.

15. Procédé selon l'une quelconque des revendications 11 à 14, **caractérisé en ce que** le préchauffage de la poudre est effectué au moyen d'un chauffage radiant intégré dans l'enducteur (8).
